# EUROPEAN PATENT SPECIFICATION

(11) **EP 3 694 746 B1**
(45) Date of publication and mention of the grant of the patent: **05.10.2022**
(21) Application number: 18702028.4
(22) Date of filing: 12.01.2018
(51) Int. Cl.: B60P 7/08, B60N 2/015, B64D 11/06

(54) **AIRCRAFT PASSENGER SEAT LEG ANTI-RATTLE WITH POSITION RESTRICTION**
ANTIKLAPPERSYSTEM FÜR FLUGGASTSITZBEINE MIT POSITIONSBESCHRÄNKUNG
SYSTÈME ANTI-RACLEMENT DE JAMBE DE SIÈGE DE PASSAGER D'AÉRONEF AVEC RESTRICTION DE POSITION

(30) Priority: 10.10.2017 US 201762570532 P
(43) Date of publication of application: 19.08.2020
(73) Proprietor: Safran Seats USA LLC, Gainesville, TX 76240 (US)
(72) Inventor: GILBERT, Klay E., Gainesville Texas 76240 (US)
(74) Representative: Marconnet, Sébastien
(86) International application number: PCT/US2018/013431
(87) International publication number: WO 2019/074534

(56) References cited:
- WO-A2-2011/005600
- WO-A2-2011/005600
- US-A- 4 708 549
- US-A- 4 708 549
- US-A- 4 796 837
- US-A- 4 796 837

## Description

### FIELD OF THE INVENTION

This application relates to passenger seats, and more particularly to mounting assemblies for passenger seats.

### BACKGROUND

Passenger vehicles, such as aircraft, buses, trains, ships, and automobiles, include passenger seats and other components (such as for galleys, lavatories, partitions, and other fixtures or infrastructure) that are retained on the floor of the vehicle through a standardized set of slotted tracks and mating fitting devices. On passenger seats including leg assemblies, the fitting devices are on the forward legs and aft legs. The fitting devices must allow for easy and quick installation and removal of the seats (e.g., for maintenance, reconfiguration of a seat layout, etc.), while also securely holding the seats in place during use. Improperly secured fitting devices (e.g., due to interference from other components, insufficient tightening, difficulty securing because special tools are required, etc.) may be loose and rattle during use, resulting in premature wear and tear on the parts, damaged parts, and a potential safety hazard during different loading conditions (e.g., various horizontal, vertical, and lateral loading conditions).

Traditional anti-rattle devices for fitting devices require special tools, and due to design, can be difficult to properly secure. In addition, while fitting devices on aft legs of the passenger seat commonly use studs and shear pins engaged with the track such that the aft fitting device can react against vertical, lateral, and horizontal loads, the fitting devices on the forward legs have studs but cannot have shear pins. As a result, the forward fitting device can react against vertical and lateral loading conditions, but is susceptible to horizontal loading conditions. Therefore, there remains a need for an anti-rattle device that can securely hold the forward leg of the passenger seat in place under different loading conditions while limiting movement of the seat leg and minimizing the transfer of horizontal loads to the seat track.

Document WO2011005600 describes a track fitting assembly comprising a main body, at least one pre-loaded stud assembly, and a track comprising a pair of lips. The at least one pre-loaded stud assembly comprises a stud and a compressing device. The al least one pre-loaded stud assembly comprises a clamped position, wherein the stud is coupled to the pair of lips and does not contact the compressing device.

### SUMMARY

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various embodiments of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

According to certain examples, an anti-rattle system for a passenger seat includes a foot pad having an upper surface, a lower surface, and a protrusion extending outward from the lower surface of the foot pad as defined in claim 1.

In some examples, a width of the protrusion is less than a width of a seat track opening of a seat track. In various aspects, the foot pad is nonmetallic. In some cases, the foot pad further includes a stud guide extending from the upper surface to the lower surface and configured to receive a forward stud of a passenger seat. In certain aspects, a width of the protrusion is greater than a width of the stud guide. According to various cases, the protrusion includes a first protrusion component and a second protrusion component spaced apart from the first protrusion component, and a distance from the first protrusion component to the second protrusion component defines the width of the protrusion. In various examples, the stud guide is a U-shaped notch.

In some aspects, the foot pad further comprises an adjuster bore extending from the upper surface to the lower surface, and wherein a central axis of the adjuster bore is at a non-zero angle relative to a vertical axis of the foot pad. In various cases, an adjuster is at least partially positioned within the adjuster bore and is configured to vertically adjust a position of the foot pad. In certain cases, the foot pad further includes a stud guide extending from the upper surface to the lower surface at a position aft of the adjuster bore, and a central axis of the stud guide is nonparallel to the central axis of the adjuster bore. In various examples, a distance between the adjuster bore axis and the stud guide axis is from about 0.50 inches to about 0.60 inches.

According to some examples, a passenger seat assembly includes a leg assembly having a forward stud and an anti-rattle system having a foot pad. The foot pad includes an upper surface, a lower surface, and a protrusion extending outward from the lower surface of the foot pad, and the anti-rattle system is engaged with the forward stud such that the protrusion is forward of the forward stud.

In various cases, the foot pad further includes a stud guide extending from the upper surface to the lower surface, and the forward stud is positionable within the stud guide such that the anti-rattle system is engaged with the forward stud. In some aspects, the stud guide is a U-shaped notch. In certain cases, a width of the protrusion is greater than a width of the stud guide. According to certain examples, the leg assembly further includes an adjuster bore configured to receive an adjuster of the anti-rattle system, and the adjuster bore extends nonparallel to the forward stud.

In certain examples, the foot pad further includes an adjuster bore, the anti-rattle system further includes an adjuster at least partially positioned in the adjuster bore of the leg assembly and the adjuster bore of the foot pad, and the adjuster is configured to position the foot pad relative to the leg assembly. In some examples, a distance between the adjuster bore and the forward stud is minimized.

In some aspects, a width of the protrusion is less than a width of a seat track opening of a seat track of an aircraft. According to various cases, the foot pad is nonmetallic. In certain examples, the protrusion includes a first protrusion component and a second protrusion component spaced apart from the first protrusion component, a distance from the first protrusion component to the second protrusion component defines a width of the protrusion, and the width of the protrusion is less than a width of a seat track opening of a seat track of an aircraft and greater than a width of a seat track channel defined by opposing track lips.

According to various examples, a method of securing a passenger seat in a vehicle includes providing a seat track defining a track channel, where a pair of track lips partially enclose an upper side of the channel and a plurality of cutouts are positioned along the pair of track lips and defining track openings. The method includes aligning a forward stud of a leg assembly of the passenger seat with one of the track openings, moving the forward stud within the track channel such that the track lips of the seat track overlap at least a portion of the forward stud and the forward stud is offset from the one track opening, and securing the leg assembly to the seat track by adjusting an anti-rattle device such that the forward stud engages the track lips within the channel and a foot pad of the anti-rattle device engages an upper surface of the seat track. Adjusting the anti-rattle device includes positioning a protrusion on a lower surface of the foot pad in a track opening forward of the forward stud.

In certain cases, positioning the protrusion includes positioning the protrusion in a track opening adjacent the forward stud. In some aspects, positioning the protrusion includes positioning the protrusion such that the protrusion does not contact inner surfaces of the track opening forward of the forward stud. In various cases, adjusting the anti-rattle device includes adjusting an adjuster within an adjuster bore of the leg assembly and an adjuster bore of the foot pad. In some examples, adjusting the adjuster biases the foot pad against the seat track and biases the leg assembly upwards such that the forward stud engages the track lips. In various examples, positioning the protrusion includes positioning the protrusion in the track opening forward of the forward stud such that the leg assembly is horizontally movable along the seat track for a predetermined distance during an alighting event without the forward stud disengaging from the seat track.

Various implementations described in the present disclosure can include additional systems, methods, features, and advantages, which cannot necessarily be expressly disclosed herein but will be apparent to one of ordinary skill in the art upon examination of the following detailed description and accompanying drawings. It is intended that all such systems, methods, features, and advantages be included within the present disclosure and protected by the accompanying claims.

### BRIEF DESCRIPTION OF THE DRAWINGS

The features and components of the following figures are illustrated to emphasize the general principles of the present disclosure. Corresponding features and components throughout the figures can be designated by matching reference characters for the sake of consistency and clarity.
FIG. 1 is a side view of a leg assembly for a passenger seat including a forward stud and anti-rattle system according to aspects of the present disclosure.
FIG. 2 is a perspective view of a portion of a seat track for the leg assembly of FIG. 1.
FIG. 3 is an end view of the forward stud of FIG. 1 being positioned within a track channel of the seat track of FIG. 2.
FIG. 4 is a top view of the forward stud of FIG. 1 being positioned within the track channel of the seat track of FIG. 2.
FIG. 5 is an enlarged front view of the forward stud and an anti-rattle system of FIG. 1.
FIG. 6 is an enlarged side view of the forward stud and anti-rattle system of FIG. 1.
FIG. 7 is an enlarged bottom view of the forward stud and anti-rattle system of FIG. 1.
FIG. 8 is a bottom perspective exploded view of the forward stud and anti-rattle system of FIG. 1.
FIG. 9 is a top perspective exploded view of the forward stud and anti-rattle system of FIG. 1.
FIG. 10 is a perspective view of a foot pad of the anti-rattle system of FIG. 1.
FIG. 11 is a side view of the foot pad of FIG. 10.
FIG. 12 is a top view of the foot pad of FIG. 10.
FIG. 13 is a bottom view of the foot pad of FIG. 10.
FIG. 14 is a sectional view of the foot pad of FIG. 10 taken along line 14 - 14 in FIG. 12.
FIG. 15 is a perspective view of the foot pad of FIG. 10 on a track.
FIG. 16 is a perspective view of the leg assembly of FIG. 1 before being installed on the track of FIG. 2.
FIG. 17 is a perspective view of the leg assembly of FIG. 1 installed on the track of FIG. 2 in a first position.
FIG. 18 is a perspective view of the leg assembly of FIG. 1 installed on the track of FIG. 2 in a second position.
FIG. 19 is an enlarged front view of the leg assembly of FIG. 1 installed on the track of FIG. 2.
FIG. 20 is an enlarged side view of the leg assembly of FIG. 1 installed on the track of FIG. 2.
FIG. 21 is a sectional view of the leg assembly and track taken along line 21 - 21 in FIG. 20.
FIG. 22 is a sectional view of the leg assembly and track taken along line 22 - 22 in FIG. 19.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described. Directional references such as "forward," "aft," "up," "down," "top," "left," "right," "front," and "back," among others are intended to refer to the orientation as illustrated and described in the figure (or figures) to which the components and directions are referencing.

In one aspect, disclosed is anti-rattle system for a passenger seat, such as an aircraft passenger seat, and associated methods, systems, devices, and various apparatus. The anti-rattle system includes a foot pad and at least one protrusion extending from a lower surface of the foot pad. It would be understood by one of skill in the art that the disclosed anti-rattle system is described in but a few exemplary aspects among many.

The anti-rattle system is configured to secure a passenger seat or other components to a floor of a vehicle. More specifically, the anti-rattle system is configured to secure a forward leg of a leg assembly of the passenger seat to a seat track of a vehicle, such as an aircraft. The anti-rattle system includes a foot pad having protrusions extending from a lower surface of the foot pad. The protrusions are positionable within an opening of the seat track forward of a forward stud of the forward leg and limit horizontal movement of the forward leg when assembled. The foot pad also includes a stud guide that selectively receives the front stud. Through the anti-rattle system, the forward leg is securely held against the seat track during horizontal, lateral, and vertical loading conditions, and the horizontal loads transferred to the seat track are minimized or eliminated.

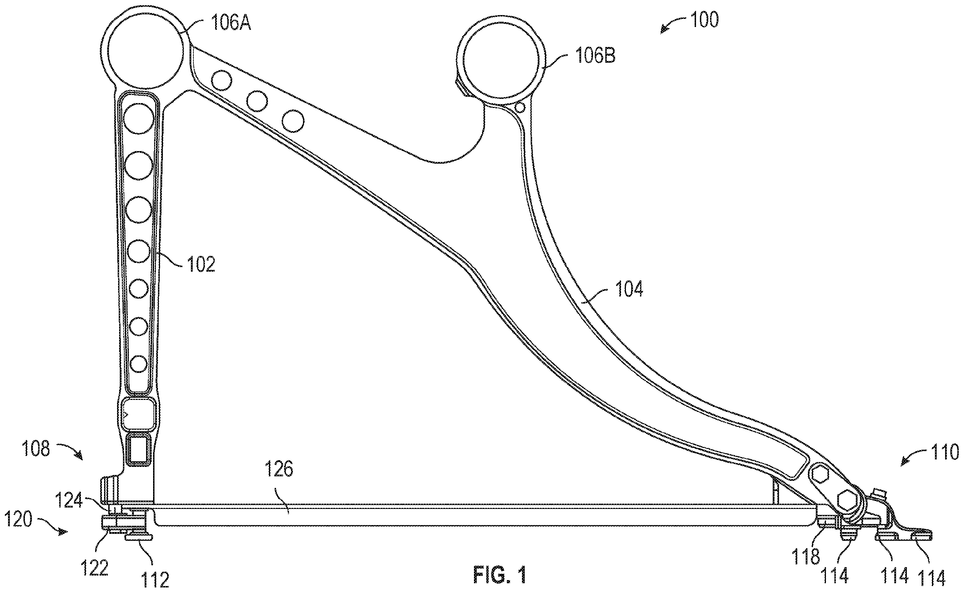

Referring to FIG. 1, a leg assembly 100 for a passenger seat is generally illustrated. The leg assembly 100 may be provided with passenger seats for various vehicles including, but not limited to, aircraft, buses, trains, ships, and automobiles. The leg assembly 100 may have various designs and configurations depending on particular use, but it generally includes a forward leg 102 and an aft leg 104. Optionally, the leg assembly 100 includes connection locations 106A-B (e.g., base frame tube supports) for connecting to various components of the passenger seat (e.g., base frame tubes, other support structures, etc.).

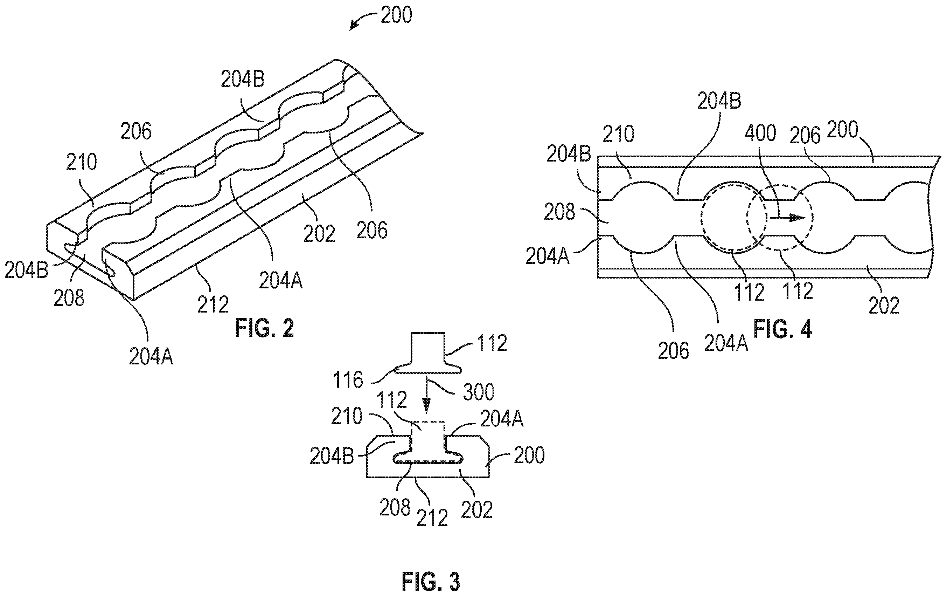

The leg assembly 100 includes a forward attachment fitting 108 at the forward leg 102 and an aft attachment fitting 110 at the aft leg 104. The forward attachment fitting 108 includes at least one forward stud 112 and the aft attachment fitting 110 includes at least one aft stud 114. In some examples, the forward attachment fitting 108 includes at least one and generally no more than two forward studs 112, although any number may be used in other examples. In various examples, the aft attachment fitting 110 includes usually two and generally no more than three aft studs 114, although any number may be used in other examples. The studs 112, 114 commonly have an inverted T-shape and configured to engage with a seat track 200 (see FIG. 2), although various other suitable shapes may be utilized for the studs 112, 114.

FIG. 2 illustrates an example of a seat track 200. As illustrated in FIG. 2, the seat track 200 includes a body 202 having an upper end 210 and a lower end 212. The body defines a track channel 208. A pair of track lips 204A-B at least partially enclose the track channel 208 at the upper end 210. As illustrated in FIG. 2, a plurality of cutouts defining track openings 206 are positioned along the pair of track lips 204A-B.

FIGs. 3 and 4 schematically illustrate the forward stud 112 being positioned on the track 200 such that the leg assembly 100 is engaged with the track 200. It will be appreciated that although reference is made to the forward stud 112, the following description is equally applicable to the aft studs 114. As illustrated in FIG. 3, the forward stud 112 has the generally inverted T-shape with a base 116 having the increased diameter. To engage the forward stud 112 with the track 200, the forward stud 112 is vertically positioned (see arrow 300 in FIG. 3) such that the base 116 is positioned within the track channel 208 through one of the track openings 206 and then horizontally positioned forward or aft (see arrow 400 in FIG. 4) such that the track lips 204A-B overlap the base 116. By engaging the forward stud 112 within the track channel 208 such that the track lips 204A-B overlap the base 116, the forward stud 112 may react against forces or loads in the vertical direction and lateral direction (which extends transversely to the arrow 400, or in a width direction of the track 200).

Referring back to FIG. 1, to limit or react against loads in the horizontal direction at the aft leg 104, the aft attachment fitting 110 includes a shear pin 118 that is positionable within one of the track openings 206 when the aft attachment fitting 110 is engaged with the track 200. Generally, the shear pin 118 is positioned as close as possible to the aft studs 114 when assembled. As described in detail below, the forward attachment fitting 108 includes an anti-rattle system 120 that is configured to both limit movement of the leg assembly 100 at the forward leg 102 (and thus reduce or eliminate rattling).

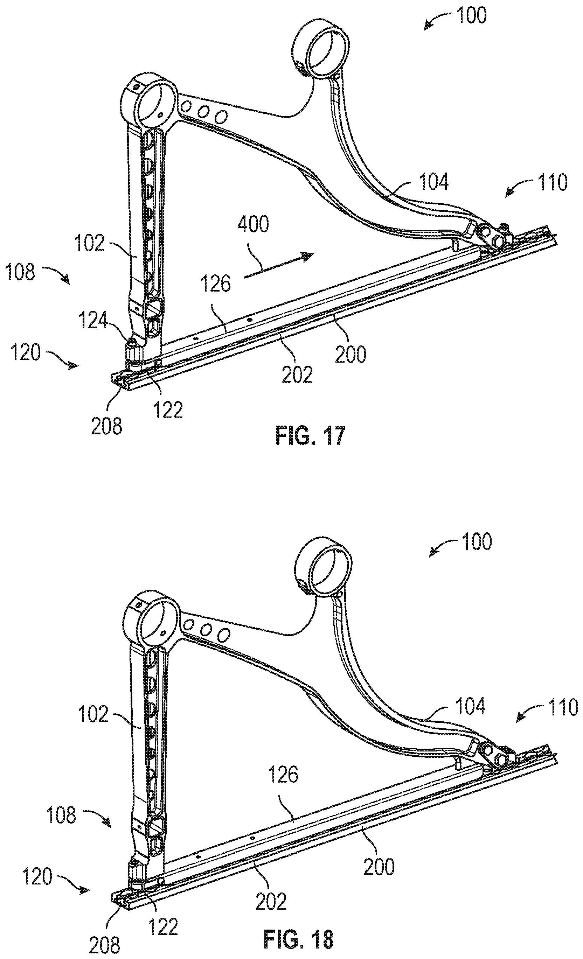

Optionally, a track cover 126 is included to provide supplementary support to the forward stud 112. When assembled in the passenger vehicle, the track cover 126 covers the seat track 200 (see, e.g., FIG. 18). The track cover 126 also connects to the aft leg 104 and the forward stud 112 to limit horizontal movement of the forward stud 112 relative to the aft leg 104. Depending on the loads reacting on the passenger seat with the leg assembly 100, the track cover 126 may function as both a tension member and a compression member. In some cases, the track cover 126 is integral with the leg assembly 100, although in other examples, the track cover 126 is a separate component of the leg assembly 100. In further examples, the track cover 126 may be omitted and/or may not connect to the forward stud 112. In such examples, reactions against loads in the horizontal direction for the forward leg may be provided by the anti-rattle system 120.

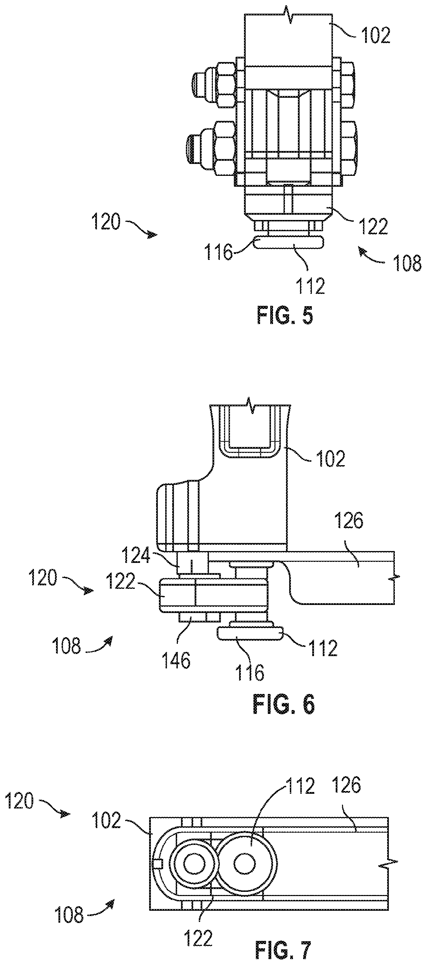

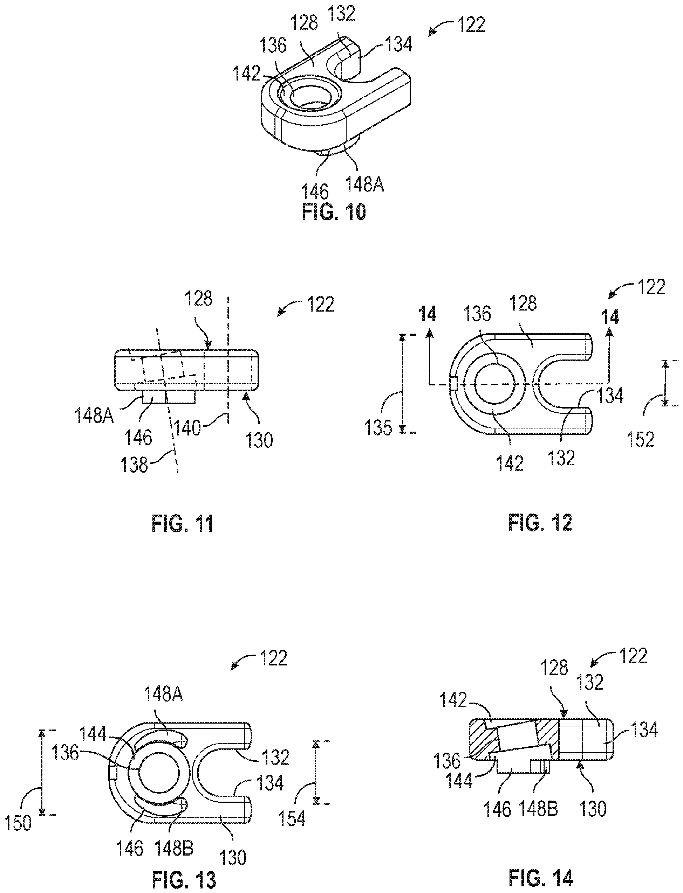

As best illustrated in FIGs. 1 and 5-9, the anti-rattle system 120 includes a foot pad 122 and an adjuster 124. Referring to FIGs. 10-14, the foot pad 122 includes an upper surface 128 and a lower surface 130. In some examples, a width 135 of the foot pad 122 is approximately the width of the seat track 200, although it need not be. In various examples, the foot pad 122 is constructed from various materials including, but not limited to, various metallic materials, nonmetallic materials, composite materials, or other suitable materials. In certain examples, the foot pad 122 is constructed from a material that minimally reacts or causes minimal galvanic corrosion with other parts of the assembly. In some non-limiting examples, the foot pad 122 may be nylon, although various other engineering plastics or other suitable material may be used. In certain non-limiting examples, the foot pad 122 may be a semi-metallic composite, a metallic/nonmetallic composite, or various other suitable materials.

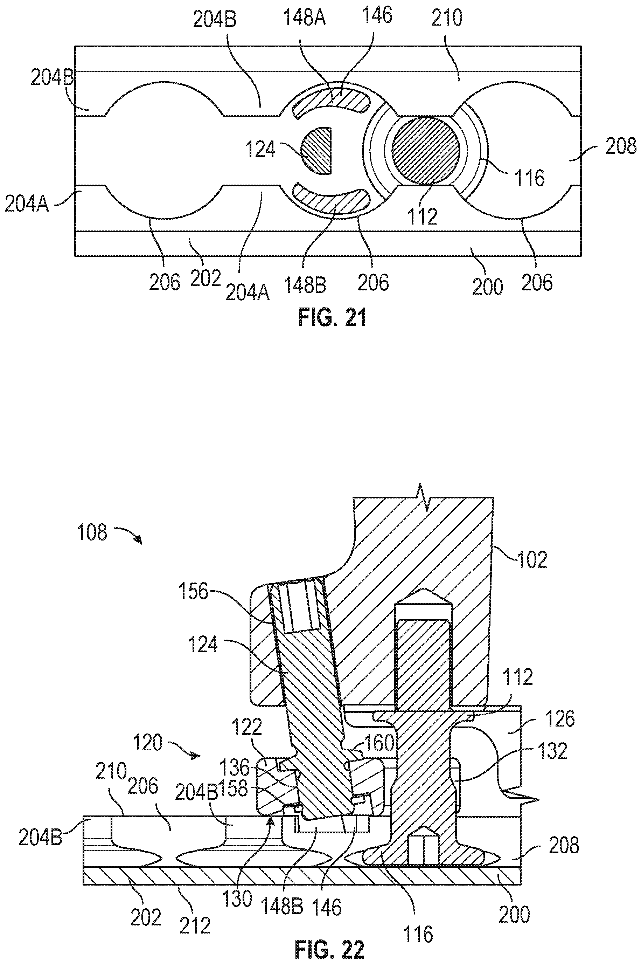

The foot pad 122 includes a stud guide 132 that extends from the upper surface 128 to the lower surface 130. In various examples, the stud guide 132 has a width 152 that is less than a width of the base 116 of the forward stud 112. When assembled with the leg assembly 100, the forward stud 112 is at least partially positioned within the stud guide 132 (see, e.g., FIG. 22). In some examples, the stud guide 132 is optionally a U-shaped notch. In such examples, the surface 134 of the stud guide 132 may provide guidance for fitting the forward stud 112 within the stud guide 132. In other examples, the stud guide 132 may be a cylindrical bore or any other shaped bore as desired. As described in detail below, by positioning the forward stud 112 within the stud guide 132 when assembled, vertical forces on the upper end 210 of the seat track 200 from the foot pad 122 are closely coaxial with the forward stud 112. As such, the axis of the forward stud 112 and the axis of the adjuster 124 are as close as possible, which can reduce the chance of increased loads on the forward stud 112 due to high moments if the adjuster 124 is over-torqued.

The foot pad 122 also includes an adjuster bore 136 forward of the stud guide 132. As illustrated in FIG. 11, the adjuster bore 136 has an adjuster bore axis 138 that is nonparallel to a stud guide axis 140 of the stud guide 132. In certain non-limiting examples, the angle between the adjuster bore axis 138 and the stud guide axis 140 is from about 6 degrees to about 10 degrees. In one non-limiting example, the angle is about 8 degrees. As described in detail below, the adjuster 124 is at least partially positioned within the adjuster bore 136 such that the adjuster 124 can adjust a position of the foot pad 122 relative to the forward stud 112 when assembled. In various non-limiting examples, a horizontal distance at the lower surface 130 between the stud guide 132 and the adjuster bore 136 is from about 0.15 inches to about 0.20 inches. In one non-limiting example, the distance is about 0.18 inch. In certain aspects, the distance the minimized such that vertical forces on the upper end 210 of the seat track 200 from the foot pad 122 (through the adjuster 124) are closely coaxial with the forward stud 112. In various cases, the angled adjuster bore axis 138 may be utilized to minimize the horizontal distance. In some examples, the adjuster bore 136 optionally includes an upper recess 142 and/or a lower recess 144. The upper recess 142 and/or lower recess 144 may aid in engagement of the adjuster 124 with the foot pad 122 when assembled.

In various examples, the foot pad 122 includes a protrusion 146 extending outward from the lower surface 130. As illustrated in FIG. 13, the protrusion 146 is forward of the stud guide 132 such that when the foot pad 122 is assembled with the forward stud 112, the protrusion 146 is forward of the forward stud 112. In certain examples, the protrusion 146 includes a first protrusion component 148A and a second protrusion component 148B, although any number of protrusion components 148 may be utilized. In some examples, an outer width 150 (the distance between opposing outer surfaces of the protrusion 146) of the protrusion 146 is less than a width of the track openings 206 (see, e.g., FIG. 21) and an inner width 154 (the distance between opposing inner surfaces of the protrusion 146) is greater than a distance between opposing track lips 204A-B (see, e.g., FIG. 21). In some non-limiting examples, the outer width 150 is less than about 0.780 inches, although it need not be. In various cases, the inner width 154 is greater than the width 152 of the stud guide 132, although it need not be.

When assembled on the seat track 200, the protrusion 146 is positioned in a track opening 206 forward of the forward stud 112. As illustrated in FIG. 21, under normal loading conditions, the protrusion 146 is spaced apart from the edges of the track opening 206 such that the protrusion 146 does not provide fixed or rigid attachment to the seat track 200 (which would otherwise cause the transfer of horizontal loads to the seat track). When the leg assembly 100 is subjected to horizontal loads, the protrusion 146 may move horizontally forward or aft until the protrusion contacts the edges of the track opening 206, thus allowing for restricted horizontal movement of the leg assembly 100 while keeping the passenger seat securely attached to the seat track 200 and without transferring appreciable horizontal loads to the seat track 200. In some non-limiting examples, the protrusion 146 may allow for horizontal movement up to about 0.10 inches forward or aft (or 0.20 inches overall), although in other examples the protrusion 146 may allow for additional or reduced horizontal movement.

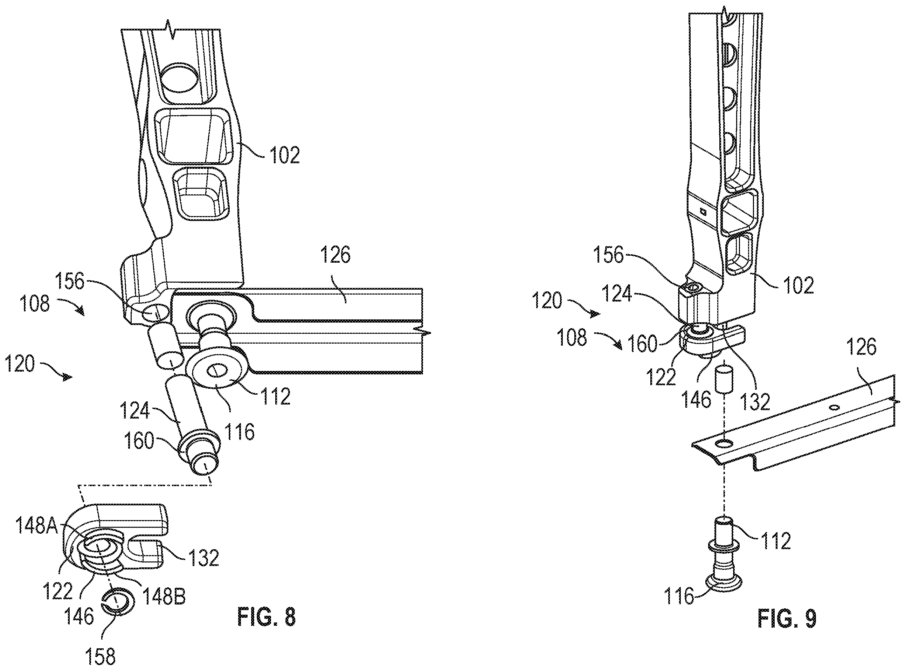

Referring back to FIGs. 8 and 9, the adjuster 124 is at least partially positionable within a foot bore 156 defined by the forward leg 102 forward of the forward stud 112. In some examples, the foot bore 156 is threaded such that the adjuster 124 can threadably engage the foot bore 156 and thereby control the position of the foot pad 122. As best illustrated in FIG. 22, similar to the adjuster bore axis 138, a central axis of the foot bore 156 is non-parallel to the forward stud 112. When assembled the central axis of the foot bore 156 is aligned with the adjuster bore axis 138. In various examples, the angled foot bore 156 allows for an installer to easily access and torque the adjuster 124 with a tool (e.g., a hex tool or other suitable tool).

In some examples, the adjuster 124 includes a collar 160 (see FIG. 8) that selectively engages and positions the foot pad 122 as the adjuster 124 is moved. In some optional examples, the collar 160 engages the foot pad 122 in the upper recess 142 of the foot pad 122 (see, e.g., FIG. 22). A retaining clip 158 may be provided to engage the adjuster 124 such that the foot pad 122 is attached on the adjuster 124 between the retaining clip 158 and collar 160. In some optional examples, the retaining clip 158 engages the foot pad 122 in the lower recess 144 (see, e.g., FIG. 22). In various examples, as the adjuster 124 is positioned within the foot bore 156 the foot pad 122 is positioned vertically and partially horizontally by engagement of the collar 160 and/or retaining clip 158 with the foot pad 122.

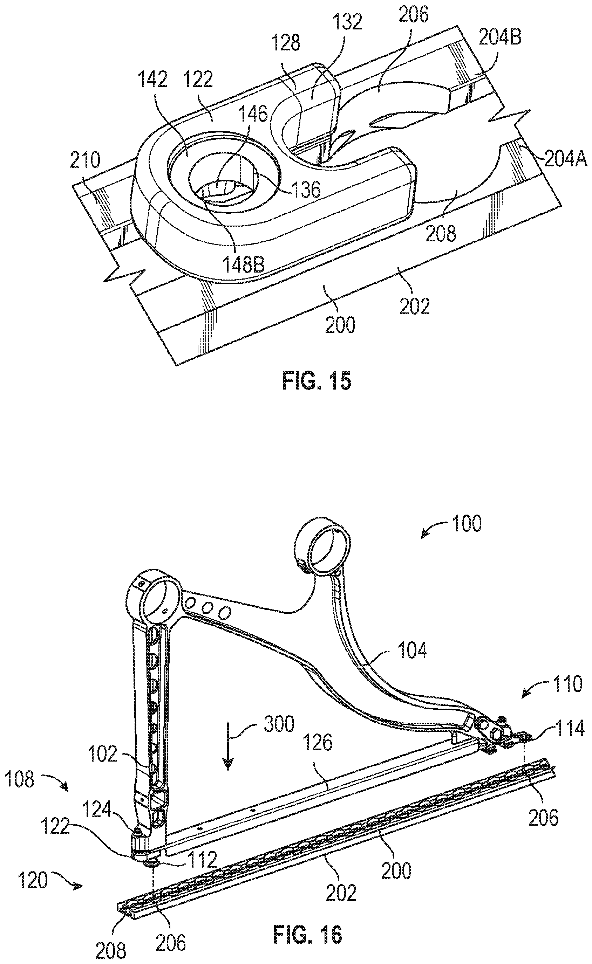

FIG. 15 illustrates the foot pad 122 positioned on the track 200. FIGs. 16-18 illustrate a sequence of steps for securing the leg assembly 100 having the anti-rattle system 120 on the track 200. As illustrated in FIG. 16, the forward stud 112 is aligned with one of the track openings 206 of the track 200, and the leg assembly is vertically positioned (see arrow 300) such that the forward stud 112 is within the track channel 208. Optionally, the foot pad 122 is loosely positioned relative to the forward stud 112 such that the protrusion 146 of the foot pad 122 is not positioned within one of the track openings 206 after initially vertically positioning the leg assembly 100. As illustrated in FIG. 17, after the forward stud 112 is positioned within the track channel 208, the leg assembly is moved horizontally (see arrows 400) in a forward direction or aft direction such that adjacent track lips 204A-B at least partially overlap the base 116 of the forward stud 112. In some optional examples, while the leg assembly 100 is being horizontally positioned, the protrusion 146 of the foot pad 122 is not positioned within the track opening 206.

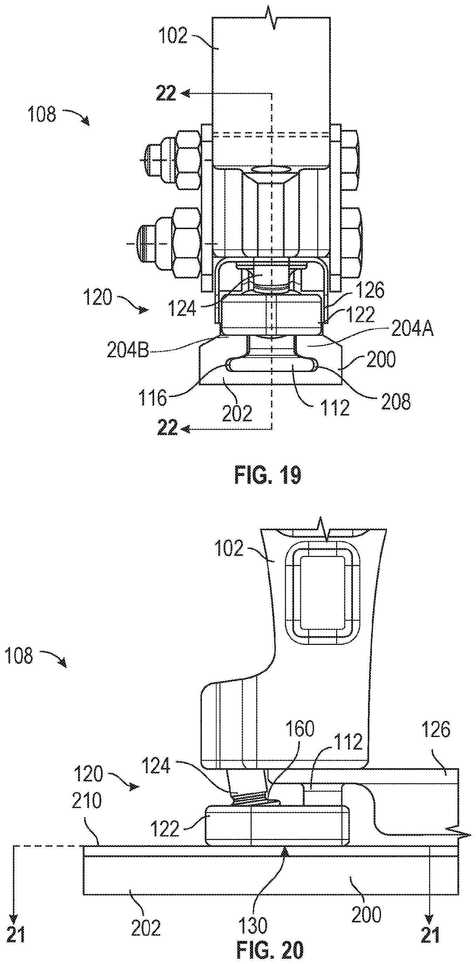

Referring to FIG. 18, after the leg assembly 100 is horizontally positioned, the leg assembly is secured in place by adjusting the adjuster 124. FIGs. 19 and 20 are enlarged views of the forward leg 102 in the position of FIG. 18. As illustrated in FIGs. 19 and 20, adjusting the adjuster 124 causes the foot pad 122 to move in the vertical direction (and partially in the horizontal direction) such that the lower surface 130 of the foot pad 122 engages the upper end 210 of the track 200 (which reduces rattling during use). Adjusting the adjuster 124 also causes the foot pad 122 to be positioned such that the protrusion 146 is aligned within one of the track openings 206 forward of the forward stud 112. As illustrated in FIG. 21, when initially positioned within the track opening 206 and without loads in the horizontal direction, the protrusion 146 is not engaged with the edges of the track opening 206. In certain examples, the protrusion 146 is aligned within the track opening 206 immediately forward of the forward stud 112. The adjuster 124 may be torqued additionally as desired such that foot pad 122 places pressure on the seat track 200 above the forward stud 112 and the forward stud 112 contacts the track lips 204A-B within the track channel 208.

## Claims

1. An anti-rattle system (120) for a passenger seat comprising a foot pad (122), wherein the foot pad (122) comprises:
an upper surface (128);
a lower surface (130);
a protrusion (146) extending outward from the lower surface (130) of the foot pad (122), the foot pad (122) further comprises:
a stud guide (132) having a central axis, **characterized in that** the foot pad further comprises:
an adjuster bore (136) having a central axis, wherein the central axis is at a non-zero angle relative to a vertical axis of the foot pad (122); and
wherein a central axis of the stud guide (132) is nonparallel to the central axis of the adjuster bore (136).

2. The anti-rattle system of claim 1, **characterized in that** the foot pad (122) is nonmetallic.

3. The anti-rattle system of claim 1, **characterized in** the stud guide (123) extends from the upper surface (128) to the lower surface (130) and configured to receive a forward stud (112) of a passenger seat.

4. The anti-rattle system of claim 3, **characterized in that** a width of the protrusion (146) is greater than a width of the stud guide (132).

5. The anti-rattle system of claim 4, **characterized in that** the protrusion (146) comprises a first protrusion component (148A) and a second protrusion component (148B) spaced apart from the first protrusion component (148A), and wherein a distance from the first protrusion component (148A) to the second protrusion component (148B) defines the width of the protrusion (146).

6. The anti-rattle system of claim 1, **characterized in that** the adjuster bore (136) extends from the upper surface (128) to the lower surface (130) of the foot pad (122).

7. The anti-rattle system of claim 6, **characterized in that** it further comprises an adjuster (124) at least partially positioned within the adjuster bore (136), wherein the adjuster (124) is configured to vertically adjust a position of the foot pad (122).

8. A passenger seat assembly comprising:
a leg assembly (100) comprising a forward stud (112); and
an anti-rattle system (120) according to any of the preceding claims
wherein the anti-rattle system (120) is engaged with the forward stud (112) such that the protrusion (146) is forward of the forward stud (112).

9. A method of securing a passenger seat in a vehicle **characterized in that** it comprises:
providing a seat track (200) defining a track channel (208), wherein a pair of track lips (204A-B) partially enclose an upper side of the channel, and wherein a plurality of cutouts are positioned along the pair of track lips (204A-B) and defining track openings (206);
aligning a forward stud (112) of a leg assembly (100) of the passenger seat with one of the track openings (206);
moving the forward stud (112) within the track channel (208) such that the track lips (204A-B) of the seat track (200) overlap at least a portion of the forward stud (112) and the forward stud (112) is offset from the one track opening; and
securing the leg assembly (100) to the seat track (200) by adjusting an anti-rattle device such that the forward stud (112) engages the track lips (204A-B) within the channel and a foot pad (122) of the anti-rattle device engages an upper surface (128) of the seat track (200),
wherein adjusting the anti-rattle device comprises positioning a protrusion (146) on a lower surface (130) of the foot pad (122) in a track opening (206) forward of the forward stud (112); and
wherein positioning the protrusion (146) comprises positioning the protrusion (146) such that the protrusion (146) does not contact inner surfaces of the track opening (206) forward of the forward stud (112).

10. The method of claim 9, **characterized in that** positioning the protrusion (146) comprises positioning the protrusion (146) in a track opening (206) adjacent the forward stud (112).

11. The method of claim 9, **characterized in that** adjusting the anti-rattle device comprises adjusting an adjuster (124) within an adjuster bore of the leg assembly (100) and an adjuster bore (136) of the foot pad (122).

12. The method of claim 11, **characterized in that** adjusting the adjuster (124) biases the foot pad (122) against the seat track (200) and biases the leg assembly (100) upwards such that the forward stud (112) engages the track lips (204A-B).

13. The method of claim 9, **characterized in that** positioning the protrusion (146) comprises positioning the protrusion (146) in the track opening (206) forward of the forward stud (112) such that the leg assembly (100) is horizontally movable along the seat track (200) for a predetermined distance during an alighting event without the forward stud (112) disengaging from the seat track (200).

## Patentansprüche

1. Rasselschutzsystem (120) für einen Passagiersitz mit einer Fußauflage (122), wobei die Fußauflage (122) umfasst:
eine obere Fläche(128);
eine untere Fläche (130);
einen Vorsprung (146), der sich von der unteren Fläche (130) der Fußauflage (122) nach außen erstreckt, wobei die Fußauflage (122) ferner umfasst:
eine Stiftführung (132) mit einer Mittelachse, **dadurch gekennzeichnet, dass** die Fußauflage ferner umfasst:
eine Einstellelementbohrung (136) mit einer Mittelachse, wobei die Mittelachse einen Winkel ungleich Null mit einer vertikalen Achse der Fußauflage (122) bildet; und wobei
die Mittelachse der Stiftführung (132) nicht parallel zur Mittelachse der Einstellelementbohrung (136) ist.

2. Rasselschutzsystem nach Anspruch 1, **dadurch gekennzeichnet, daß** die Fußauflage (122) nicht metallisch ist.

3. Rasselschutzsystem nach Anspruch 1, **dadurch gekennzeichnet, dass** sich die Stiftführung (123) von der oberen Fläche (128) zur unteren Fläche (130) erstreckt und zur Aufnahme eines vorderen Bolzens (112) eines Passagiersitzes ausgebildet ist.

4. Rasselschutzsystem nach Anspruch 3, **dadurch gekennzeichnet, daß** die Breite des Vorsprungs (146) größer als die Breite der Stiftführung (132).

5. Rasselschutzsystem nach Anspruch 4, **dadurch gekennzeichnet, dass** der Vorsprung (146) einen ersten Vorsprungbauteil (148A) und einen zweiten, von der ersten Vorsprungbauteil (148A) beabstandeten Vorsprungbauteil (148B) umfasst, und wobei der Abstand des ersten Vorsprungbauteils (148A) zu dem zweiten Vorsprungbauteil (148B) die Breite des Vorsprungs (146) definiert.

6. Rasselschutzsystem nach Anspruch 1, **dadurch gekennzeichnet, dass** sich die Einstellelementbohrung (136) von der oberen Fläche (128) bis zur unteren Fläche (130) der Fußauflage (122) erstreckt.

7. Rasselschutzsystem nach Anspruch 6, **dadurch gekennzeichnet, dass** es ferner ein Einstellelement (124) umfasst, das zumindest teilweise innerhalb der Einstellelementbohrung (136) positioniert ist, wobei das Einstellelement (124) ausgebildet ist, die Position der Fußauflage (122) vertikal einzustellen.

8. Passagiersitzanordnung, umfassend:
eine Stützanordnung (100) mit einem vorderen Stift (112); und
ein Rasselschutzsystem (120) nach einem der vorhergehenden Ansprüche,
wobei das Rasselschutzsystem (120) mit dem vorderen Stift (112) in Eingriff steht, so dass sich der Vorsprung (146) vor dem vorderen Stift (112) befindet.

9. Verfahren zur Befestigung eines Passagiersitzes in einem Fahrzeug, **dadurch gekennzeichnet, dass** es umfasst:
Bereitstellen einer Sitzschiene (200), die einen Schienenkanal (208), ein Paar Schienenlippen (204A-B), die teilweise eine Oberseite des Kanals umschließt, und wobei mehrere Ausschnitten entlang dem Paar Schienenlippen (204A) positioniert sind und Schienenöffnungen (206) definieren;
Ausrichten eines vorderen Stifts (112) einer Stützanordnung (100) des Passagiersitzes mit einer der Schienenöffnungen (206);
Bewegen den vorderen Stift (112) innerhalb des Schienenkanals (208), so dass die Schienenlippen (204A-B) der Sitzschiene (200) mindestens einen Abschnitt des vorderen Stifts (112) überlappen, und der vordere Stift (112) von der einen der Schienenöffnungen versetzt ist; und
Befestigen die Stützanordnung (100) an der Sitzschiene (200) durch Einstellen einer Rasselschutzvorrichtung, so dass der vordere Stift (112) mit den Schienenlippen (204A-B) innerhalb des Kanals zusammenwirkt, und eine Fußauflage (122) der Rasselschutzvorrichtung mit einer oberen Fläche (128) der Sitzschiene (200) zusammenwirkt,
wobei das Einstellen der Rasselschutzvorrichtung das Positionieren eines Vorsprungs (146) an einer unteren Fläche (130) der Fußauflage (122) in einer Schienenöffnung (206) vor dem vorderen Stift (112) umfasst; und
wobei das Positionieren des Vorsprungs (146) derart das Positionieren des Vorsprungs (146) umfasst, dass der Vorsprung (146) nicht die inneren Flächen der Schienenöffnung (206) vor dem vorderen Stift (112) berührt.

10. Verfahren nach Anspruch 9, **dadurch gekennzeichnet, dass** das Positionieren des Vorsprungs (146) das Positionieren des Vorsprungs (146) in einer am vorderen Stift (112) angrenzenden Schienenöffnung (206) umfasst.

11. Verfahren nach Anspruch 9, **dadurch gekennzeichnet, dass** das Einstellen der Rasselschutzvorrichtung das Einstellen eines Einstellelements (124) in einer Einstellelementbohrung der Stützanordnung (100) und in einer Einstellelementbohrung (136) der Fußauflage (122) umfasst.

12. Verfahren nach Anspruch 1, **dadurch gekennzeichnet, dass** die Einstellung des Einstellelements (124) die Fußauflage (122) gegen die Sitzschiene (200) vorspannt und die Stützanordnung (100) nach oben vorspannt, so dass der vordere Stift (112) mit den Schienenlippen (204A-B) zwischenwirkt.

13. Verfahren nach Anspruch 9, **dadurch gekennzeichnet, dass** das Positionieren des Vorsprungs (146) derart das Positionieren des Vorsprungs (146) in der Schienenöffnung (206) vor dem vorderen Stift (112) umfasst, dass die Stützanordnung (100) horizontal entlang der Sitzschiene (200) um eine vorbestimmte Distanz während eines Landeereignisses beweglich ist, ohne dass sich der vordere Stift (112) von der Sitzschiene (200) löst.

## Revendications

1. Système anti-cliquetis (120) destiné à un siège de passager, ledit système comprenant un patin de pied (122), le patin de pied (122) comprenant :
une surface supérieure (128) ;
une surface inférieure (130) ;
une saillie (146) qui s'étend vers l'extérieur depuis la surface inférieure (130) du patin de pied (122), le patin de pied (122) comprenant en outre :
un guide de plongeur (132) qui comporte un axe central, **caractérisé en ce que** le patin de pied comprend en outre :
un alésage d'élément d'ajustement (136) qui comporte un axe central, l'axe central formant à un angle non nul avec un axe vertical du patin de pied (122) ; et
l'axe central du guide de plongeur (132) n'étant pas parallèle à l'axe central de l'alésage d'élément d'ajustement (136) .

2. Système anti-cliquetis selon la revendication 1, **caractérisé en ce que** le patin de pied (122) est non métallique.

3. Système anti-cliquetis selon la revendication 1, **caractérisé en ce que** le guide de plongeur (123) s'étend de la surface supérieure (128) à la surface inférieure (130) et est conçu pour recevoir un plongeur avant (112) d'un siège de passager.

4. Système anti-cliquetis selon la revendication 3, **caractérisé en ce que** la largeur de la saillie (146) est supérieure à la largeur du guide de plongeur (132).

5. Système anti-cliquetis selon la revendication 4, **caractérisé en ce que** la saillie (146) comprend un premier composant de saillie (148A) et un deuxième composant de saillie (148B) espacé du premier composant de saillie (148A), et la distance du premier composant de saillie (148A) au deuxième composant de saillie (148B) définissant la largeur de la saillie (146).

6. Système anti-cliquetis selon la revendication 1, **caractérisé en ce que** l'alésage d'élément d'ajustement (136) s'étend de la surface supérieure (128) à la surface inférieure (130) du patin de pied (122).

7. Système anti-cliquetis selon la revendication 6, **caractérisé en ce qu'**il comprend en outre un élément d'ajustement (124) positionné au moins partiellement à l'intérieur de l'alésage d'élément d'ajustement (136), l'élément d'ajustement (124) étant conçu pour ajuster verticalement la position du patin de pied (122).

8. Ensemble de siège de passager comprenant :
un ensemble support (100) qui comprend un plongeur avant (112) ; et
un système anti-cliquetis (120) selon l'une quelconque des revendications précédentes,
le système anti-cliquetis (120) coopérant avec le plongeur avant (112) de sorte que la saillie (146) soit en avant du plongeur avant (112).

9. Procédé de fixation d'un siège de passager dans un véhicule, **caractérisé en ce qu'**il comprend les étapes suivantes :
fournir un rail de siège (200) qui définit un canal de rail (208), une paire de lèvres de rail (204A-B) enfermant partiellement un côté supérieur du canal, et une pluralité de découpes étant positionnées le long de la paire de lèvres de rail (204A-B) et définissant des ouvertures de rail (206) ;
aligner un plongeur avant (112) d'un ensemble support (100) du siège de passager avec l'une des ouvertures de rail (206) ;
déplacer le plongeur avant (112) à l'intérieur du canal de rail (208) de sorte que les lèvres de rail (204A-B) du rail de siège (200) chevauchent au moins une portion du plongeur avant (112) et que le plongeur avant (112) soit décalé par rapport à ladite une des ouvertures de rail ; et
fixer l'ensemble support (100) au rail de siège (200) par ajustement d'un dispositif anti-cliquetis de sorte que le plongeur avant (112) coopère avec les lèvres de rail (204A-B) à l'intérieur du canal et qu'un patin de pied (122) du dispositif anti-cliquetis coopère avec une surface supérieure (128) du rail de siège (200),
l'ajustement du dispositif anti-cliquetis comprenant le positionnement d'une saillie (146) sur une surface inférieure (130) du patin de pied (122) dans une ouverture de rail (206) en avant du plongeur avant (112) ; et
le positionnement de la saillie (146) comprenant le positionnement de la saillie (146) de sorte que la saillie (146) n'entre pas en contact avec des surfaces intérieures de l'ouverture de rail (206) en avant du plongeur avant (112).

10. Procédé selon la revendication 9, **caractérisé en ce que** le positionnement de la saillie (146) comprend le positionnement la saillie (146) dans une ouverture de rail (206) adjacente au plongeur avant (112).

11. Procédé selon la revendication 9, **caractérisé en ce que** l'ajustement du dispositif anti-cliquetis comprend l'ajustement d'un élément d'ajustement (124) dans un alésage d'élément d'ajustement de l'ensemble support (100) et d'un alésage d'élément d'ajustement (136) du patin de pied (122).

12. Procédé selon la revendication 1, **caractérisé en ce que** l'ajustement de l'élément d'ajustement (124) amène le patin de pied (122) contre le rail de siège (200) et amène l'ensemble support (100) vers le haut de sorte que le plongeur avant (112) coopère avec les lèvres de rail (204A-B) .

13. Procédé selon la revendication 9, **caractérisé en ce que** le positionnement de la saillie (146) comprend le positionnement de la saillie (146) dans l'ouverture de rail (206) en avant du plongeur avant (112) de sorte que l'ensemble support (100) soit mobile horizontalement le long du rail de siège (200) sur une distance prédéterminée pendant un événement d'atterrissage sans que le plongeur avant (112) ne se dégage du rail de siège (200).
